# EUROPÄISCHE PATENTSCHRIFT

(11) **EP 1 479 028 B1**
(45) Veröffentlichungstag und Bekanntmachung des Hinweises auf die Patenterteilung: **27.09.2006**
(21) Anmeldenummer: 03708033.0
(22) Anmeldetag: 13.02.2003
(51) Int. Cl.: G06K 7/00, G06K 13/08

(54) **CHIPKARTEN-AUFNAHMEVORRICHTUNG MIT EINEM EINE CHIPKARTE HALTERNDEN SCHLITTEN**
CHIP-CARD-RECEIVING DEVICE COMPRISING A CARRIAGE FOR HOLDING A CHIP CARD
DISPOSITIF DE RECEPTION DE CARTES A PUCE COMPRENANT UNE PIECE COULISSANTE SERVANT DE SUPPORT A UNE CARTE A PUCE

(30) Priorität: 26.02.2002 DE 10208259
(43) Veröffentlichungstag der Anmeldung: 24.11.2004
(73) Patentinhaber: SIEMENS AKTIENGESELLSCHAFT, 80333 München (DE)
(72) Erfinder: RIESTER, Thomas, 78052 Villingen-Schwenningen (DE); HAUTVAST, Heinz-Josef, 78086 Brigachtal (DE)
(86) Internationale Anmeldenummer: PCT/DE2003/000442
(87) Internationale Veröffentlichungsnummer: WO 2003/073361

(56) Entgegenhaltungen:
- DE-A- 19 809 619
- DE-U- 29 609 474

## Beschreibung

Die Erfindung betrifft eine Chipkarten-Aufnahmevorrichtung mit einem eine Chipkarte halternden Schlitten, welcher zwischen einer Eingabe-/Entnahmeposition und einer Lese-/Schreibposition auf einem Träger verschiebbar gelagert ist, sowie mit Mitteln zum Festspannen und Freigeben einer Chipkarte.

Die Anwendung von Chipkarten, beispielweise zur Erfassung der persönlichen Arbeits- und Ruhezeiten der Fahrer von Nutzfahrzeugen, erfordert wegen des dokumentarischen Wertes dieser Aufzeichnungen zuverlässige Sicherungen zur Vermeidung von in betrügerischer Absicht erfolgenden Störungen der Datenübertragung zwischen dem Datenerfassungsgerät, in diesem Falle einem Fahrtschreiber und einer Chipkarte. Anderseits besteht beim Nutzfahrzeugeinsatz von Chipkarten milieubedingt ein erhöhtes Risiko bez. Kontaktunterbrechungen zwischen einem Lese-/Schreibkontaktsatz und den Chipkarten. Hinzu kommt, dass bei der Anwendung von Chipkarten in Fahrtschreibern relativ häufige Eingaben und Entnahmen der Chipkarten aufgrund von Fahrer- und Fahrzeugwechseln sowie Verkehrskontrollen erfolgen und die Chipkarten nicht immer mit der erforderlichen Sorgfalt gehandhabt werden. Dadurch, aber auch durch Tragen und Aufbewahren der Chipkarten außerhalb eines Fahrzeuges, können die Chipkarten beschädigt oder verformt sein. Solche Verformungen von Chipkarten sowie die unvermeidlichen Einwirkungen von betriebsbedingten Schwingungen und Stößen dürfen aber nicht dazu führen, dass beim Eingeben einer Chipkarte in die Aufnahmevorrichtung die Lese-/Schreibkontakte beschädigt werden oder die Funktion der Chipkarte, wenn diese sich in der Lese-/Schreibposition befindet, gestört ist.

Ein weiteres Problem stellt der Transport der Chipkarten innerhalb der Aufnahmevorrichtung zwischen der Eingabe-/Entnahmeposition und der Lese-/Schreibposition dar. Bei einer Eingabe ausschließlich von Hand besteht die Gefahr, dass eine Chipkarte in der Lese-/Schreibposition nicht exakt positioniert wird. Außerdem sind, da eine eingegebene Chipkarte von außen zugänglich ist, Manipulationen möglich, auch wenn der betreffenden Aufnahmevorrichtung frontseitig Riegel oder Blenden zugeordnet sind. Um somit einerseits die Einflussnahme von außen zu verhindern anderseits eine exakte Positionierung bzw. Kontaktierung einer eingegebenen Chipkarte sicherzustellen, ist daher ein selbsttätiger Transport der Chipkarten zwischen der Eingabe-/Entnahmeposition und der Lese-/Schreibposition unter Inkaufnahme eines gegebenenfalls höheren Aufwandes zu bevorzugen. Das Einsatzmilieu im Nutzfahrzeug und die sich durch die relativ häufige Handhabung der Chipkarten ergebende Schmutzbelastung, insbesondere durch Öle und Fette, aber auch großseriengerechte Toleranzen und Dickenunterschiede der Chipkarten, bedingen jedoch, dass eine an sich naheliegende Transportanordnung mit einer in geeigneter Weise angetriebenen Friktionswelle oder mit Friktionswalzen keine ausreichende Transportsicherheit bietet. D.h., ein Hängebleiben einer Chipkarte, insbesondere beim Transport in die Entnahmeposition, würde eine erhebliche Funktionsstörung des betreffenden Fahrtschreibers bedeuten.

Bei einer mit der DE 198 09 619 A1 bekannt gewordenen Transportanordnung werden die Chipkarten auf einem verschiebbar gelagerten Schlitten durch seitliches Greifen festgespannt. Hierzu dient ein an dem Schlitten gefedert gelagerter und quer zur Bewegungsrichtung des Schlittens bewegbarer Schieber, welcher von einer Kulisse eines Kippsprungwerkes, das beim Einführen einer Chipkarte in die betreffende Aufnahmevorrichtung ausgelöst wird, gesteuert wird.

Diese Transportanordnung ermöglicht im Prinzip, insbesondere was das Greifen einer Chipkarte anbelangt, eine hohe Flächenpressung und vermeidet dadurch eine Relativbewegung zwischen der Chipkarte und dem Schlitten während des Transports; sie bietet aber keine Niederhaltefunktion für gewölbte bzw. verbogene Chipkarten. Außerdem kann bei verformten Chipkarten die Greiffunktion eingeschränkt oder überhaupt nicht mehr gegeben sein. Ein weiterer Nachteil ist dadurch gegeben, dass die Greiffunktion auf einfache Weise dadurch manipuliert werden kann, dass die Breite einer Chipkarte verringert wird.

Die der Erfindung zugrunde liegende Aufgabe bestand somit darin, eine serientaugliche und für den Einsatz in Nutzfahrzeugen geeignete Chipkarten-Aufnahmevorrichtung zu schaffen, die einen absolut sicheren Transport der Chipkarten und eine verlässliche Kontaktierung der Chipkarten in der Lese-/Schreibposition auch bei verformten oder beschädigten Chipkarten gewährleistet und möglichst raumsparend realisierbar ist.

Die Lösung der Aufgabe sieht eine chipkarten-Aufnahme vorrichting nach Anspruch 1 oder Anspruch 10 vor.

Ein bevorzugtes Ausführungsbeispiel ist dadurch gekennzeichnet, dass an dem Schlitten eine Verzahnung ausgebildet ist und dass der Schlitten getrieblich mit einem in seiner Drehrichtung umsteuerbaren Motor in Verbindung steht und dass ferner jedes Spannelement an der der Chipkartenebene zugewandten Seite mit einem Reibmaterial belegt ist.

Weitere vorteilhafte Ausgestaltungen der Erfindung gehen aus den vorstehend nicht zitierten Unteransprüchen und aus der Beschreibung der beigefügten Zeichnungen hervor.

Die Erfindung bietet insbesondere den Vorteil, dass eine hohe Flächenpressung ausgeübt werden kann, so dass auch noch bei einem durch Versschmutzung verringerten Reibwert ausreichend hohe Haltekräfte wirksam sind. Ferner wird durch die Zangenfunktion, d.h. das beiderseitige großflächige Greifen der Spannelemente und durch die Verwendung geeigneter Reibbeläge eine hohe Adhäsionswirkung zwischen einer Chipkarte und den Spannelementen erzielt, was eine rutschsichere Mitnahme einer Chipkarte während des Transports und eine schwingungs- und stoßsichere Halterung einer Chipkarte in der Lese-/Schreibposition gewährleistet, und, da der Schlitten relativ engtoleriert auf dem Träger gelagert werden kann, ein schwingungsbedingtes Durchscheuern der Chipkartenkontakte vermeidet. Hervorzuheben ist ferner, dass das eine das Kontaktfeld einer eingegebenen Chipkarte umgreifende Spannelement im unmittelbaren Kontaktbereich als Niederhalter wirksam ist und auf diese Weise eine zuverlässige Kontaktierung auch unebener Chipkarten ermöglicht wird. Ferner bietet die gefundene Lösung trotz robuster Bauweise eine hohe Manipulationssicherheit, da die Spannelemente auf der gesamten Breite einer Chipkarte einerseits mit großer Kraft aufliegen andererseits seitlich in Nuten geführt sind und dadurch in der Lese-/Schreibposition nicht angehoben werden können. Insofern ermöglicht es die gefundene Lösung, dass zusätzliche, der Chipkarten-Aufnahmevorrichtung zugeordnete Verriegelungsmittel nicht zwingend vorgesehen werden müssen, und zwar auch dann nicht, wenn die Chipkarten im Gegensatz zum bevorzugten Ausführungsbeispiel, welches einen formschlüssigen, von der Sorgfalt des Benutzers unabhängigen, Transport des die Chipkarten halternden Schlittens vorsieht, ausschließlich von Hand in die Lese-/Schreibposition vorgesteckt und mittels eines in geeigneter Weise angetriebenen Stößels kraftschlüssig in die Entnahmeposition bewegt werden.

Der Vollständigkeit halber sei noch erwähnt, dass die Anwendung der lösungsgemäßen Chipkarten-Aufnahmevorrichtung zwar im Hinblick auf den Einsatz im Nutzfahrzeug optimiert, wegen des relativ geringem Fertigungs- und Montageaufwandes und einer, die Antriebsmittel einbezogen, geringen Bauhöhe ohne weiteres auch für eine allgemeine Anwendung geeignet ist. Das bevorzugte Ausführungsbeispiel stellt eine in diesem Sinne zweckdienliche, weitgehend autarke Baugruppe dar, die bei Ausbildung geeigneter Distanzbolzen mit minimalem Flächenbedarf einer Leiterplatte zugeordnet werden kann. Im übrigen ermöglicht die konstruktive Gestaltung der Chipkarten-Aufnahmevorrichtung mit einem verwindungssteifen Träger, der beispielsweise auch als Outsert-Platine ausgebildet werden kann, und die unmittelbare Zuordnung der einzelnen Bauelemente und Baugruppen zu dem Träger, eine minimale Toleranzaddition, sodass die Bauteilefertigung mit großserienfähigen Toleranzen erfolgen kann. Außerdem sei noch darauf hingewiesen, dass eine vereinfachte Ausführung dadurch erzielt werden kann, dass lediglich ein Spannelement vorgesehen ist, welches unmittelbar mit einem in geeigneter Weise ausgebildeten Schlitten, und zwar an dessen dem ortsfesten Kontaktsatz zugewandten Seite zusammenwirkt.

Im folgenden sei das bevorzugte Ausführungsbeispiel einer Chipkarten-Aufnahmevorrichtung anhand von Zeichnungen näher erläutert. Es zeigen:
Figur 1, eine Draufsicht auf die Anflanschebene der Chipkarten- Aufnahmevorrichtung,
Figur 2, eine Untersicht der Chipkarten-Aufnahmevorrichtung gemäß Figur 1,

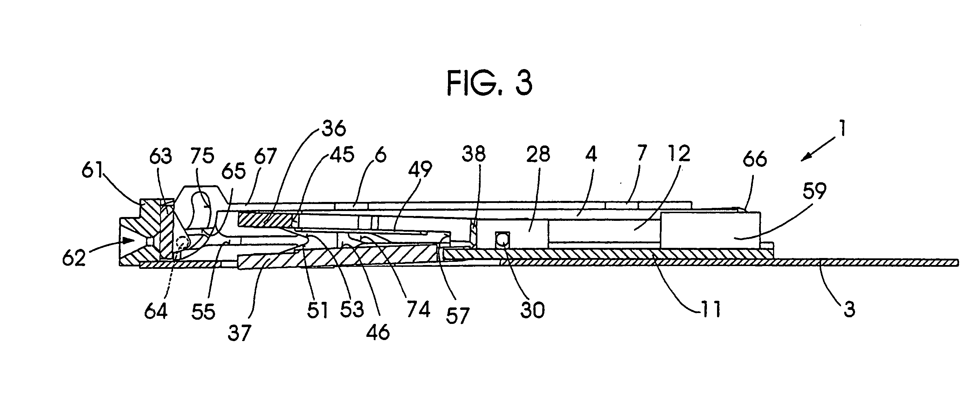

Figur 3, einen Schnitt gemäß der Schnittlinie A in Figur 1 in vergrößerter Darstellung,
Figur 4, eine Draufsicht gemäß Figur 1 mit einer in der Lese-/Schreibposition befindlicher Chipkarte,
Figur 5, eine Seitenansicht in Pfeilrichtung C in Figur 4.

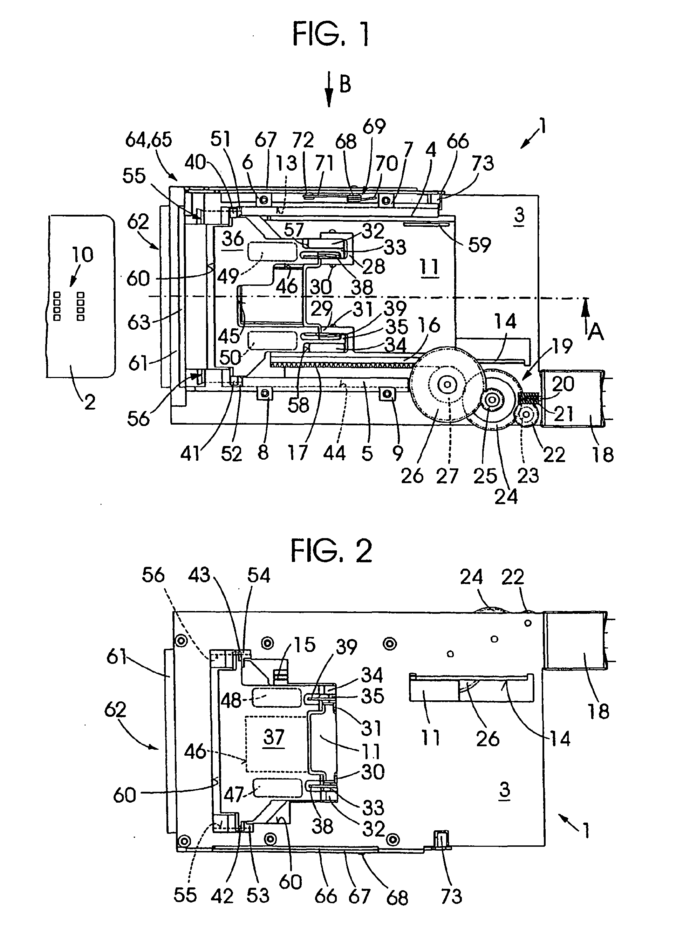

Wie aus den Zeichnungen ersichtlich ist, weist die Chipkarten-Aufnahmevorrichtung 1, welcher eine Chipkarte 2 symbolisch zugeordnet ist, einen verwindungssteifen Träger 3 auf, an dem Schienen 4 und 5 befestigt, vorzugsweise im Outsert-Spritzgießtechnik angeformt sind. Den Schienen 4, 5 zugeordnete, mit nicht näher bezeichneten Gewindebohrungen versehene Stützen 6, 7, 8 und 9 dienen der Befestigung der Chipkarten-Aufnahmevorrichtung 1 beispielweise an der Leiterplatte eines Gerätes, an welcher zweckmäßigerweise ein den Plattenkontakten 10 der Chipkarten 2 zugeordneter Kontaktsatz angeordnet ist. Mit 11 ist ein Schlitten bezeichnet, der einerseits mittels einer Wange 12 in einen in der Schiene 4 vorgesehenen Hinterschnitt 13 eingreift andererseits an einer an dem Träger 3 ausgebildeten Leiste 14, welcher ein in dem Schlitten 11 ausgebildeter Schlitz 15 (Figur 2) zugeordnet ist, längsverschieblich auf dem Träger 3 gelagert ist. Eine weitere Wange 16 des Schlittens 11 trägt eine Verzahnung 17, über die der Schlitten 11 getrieblich mit einem in seiner Drehrichtung umsteuerbaren Stellmotor 18 in Wirkverbindung steht. Das Getriebe 19 umfasst eine auf der Welle 20 des Stellmotors 18 befestigte Schnecke 21, ein erstes Zahnradpaar mit einem mit der Schnecke 21 kämmenden schrägverzahnten Stirnrad 22 und einem geradverzahnten Stirnrad 23, ein Zahnradpaar 24/ 25 mit einer zwischengeschalteten Friktionskuppelung sowie ein Zahnradpaar 26/ 27, dessen eines Zahnrad 27 in die Verzahnung 17 des Schlittens 11 eingreift. Auf dem Schlitten 11 sind ferner Lagerböcke 28 und 29 ausgebildet, die der Halterung von Achsen 30 und 31 dienen, auf welchen jeweils ein Schenkel 32 und 33 sowie 34 und 35 von zwei Spannelementen 36 und 37 gelagert sind. Außerdem dienen die Achsen 30, 31 der Aufnahme von Schenkelfedern 38 und 39, deren jeweils einer Schenkel unter Vorspannung auf eines der Spannelemente 36, 37 einwirken derart, dass die Spannelemente 36, 37 zangenartig gegeneinander wirken. Ferner sind an den Spannelementen 36, 37 sich gegenüberliegende Finger 40, 41 und 42, 43 derart ausgebildet, dass die Finger 40, 42 einerseits in den Hinterschnitt 13 und die Finger 41, 43 in einen in der Schiene 5 ausgebildeten Hinterschnitt 44 eingreifen. Wie die Figur 1 zeigt, ist das Spannelement 36 mit einer den Durchtritt der Kontaktfedern des Lese-/Schreibkontaktsatzes auf die Plattenkontakte 10 einer in Lese- /Schreibposition befindlichen Chipkarte 2 ermöglichenden Freisparung 45 versehen, sodass das Spannelement 36 u- oder bügelförmig ausgebildet ist. Demgegenüber weist das Spannelement 37 ein einer eingegebenen Chipkarte 2 zugewandtes Podest 46 auf. Beiderseits des Podestes 46 sind auf dem Spannelement 37 Reibbeläge 47 und 48 angebracht, denen am Spannelement 36 vorgesehene Reibbeläge 49 und 50 gegenüberstehen. Die Reibbeläge 47, 48, 49, 50, die in Zusammenwirken mit den Schenkelfedern 38, 39 dem Festhalten einer eingeführten Chipkarte 2 sowohl während des Transports als auch in der Lese-/Schreibposition dienen, können in vorteilhafter Weise dadurch ergänzt werden, dass an den Spannelementen zusätzlich quer zur Einführrichtung der Chipkarten bzw. parallel zu den Achsen der Spannelemente 36, 37 Reibbeläge angebracht werden. Denkbar ist es, dass ausschließlich die letztgenannten Reibbeläge vorgesehen werden, da sie den Vorzug bieten, dass ein Zugriff zum Kontaktbereich von außen mit unterbrechenden oder leitenden Folien oder Drähten ausgeschlossen ist.

Wie ferner aus den Zeichnungen hervorgeht sind den Spannelementen 36, 37 bzw. den an den Spannelementen 36, 37 ausbildeten Fingern 40, 41, 42, 43 an den Schienen 4, 5 angeformte Rampen 51 und 52 bzw.53 und 54 zugeordnet. Zwischen den Rampen 51, 52 und 53, 54 ausgebildete, der Chipkarte 2 zugeordnete Führungsschlitze sind mit 55 und 56 bezeichnet. An den Schenkeln 32 und 34 des Spannelementes 37 sind Anschlagflächen 57 und 58 ausgebildet, über die beim Eingeben der Chipkarte 2 eine kurze Mitnahme des Schlittens 11 bis zu dessen selbsttätigem Transport von Hand erfolgt. Letzterer wird mittels einer Lichtschranke gesteuert, deren Fahne dem Schlitten 11 zugeordnet und mit 59 bezeichnet ist. 60 stellt eine dem Durchtritt des Spannelementes 37 durch die Ebene des Trägers 3 dienende Freisparung dar. In einem an dem Träger 3 befestigten bzw. an dem Träger 3 angeformten Frontbalken 61 ist ein dem Ausrichten einer einzugebenden Chipkarte 2 dienender Orientierungsschlitz 62 ausgebildet. Außerdem ist an dem Frontbalken 61 eine Klappe 63, welche ein Abdecken des Orientierungsschlitzes 62 gestattet, schwenkbar gelagert. Die Klappe 63 ist über eine Stift-Schlitz-Verbindung 64, 65 mit einem zweiarmigen Steuerhebel 66 gekoppelt, welcher auf einer an einer Seitenwand 67 des Trägers 3 befestigten Achse 68 drehbar gelagert ist. An dem Steuerhebel 66, dem eine ebenfalls auf der Achse 68 angeordnete Schenkelfeder 69 zugeordnet ist, deren einer Schenkel 70 sich auf dem Träger 3 abstützt und deren anderer Schenkel 71 an einem in dem Steuerhebel 66 befestigten Stift 72 anliegt, ist ein Führungsstift 73 angebracht, welchem eine in dem Schlitten 11 ausgebildete Kulisse 74 zugeordnet ist. Eine schlitzförmige Aussparung 75 ist für eine reibungsfreie Bewegung des Stiftes 64 der Stift-Schlitz-Verbindung 64/65 in der Seitenwand 67 vorgesehen.

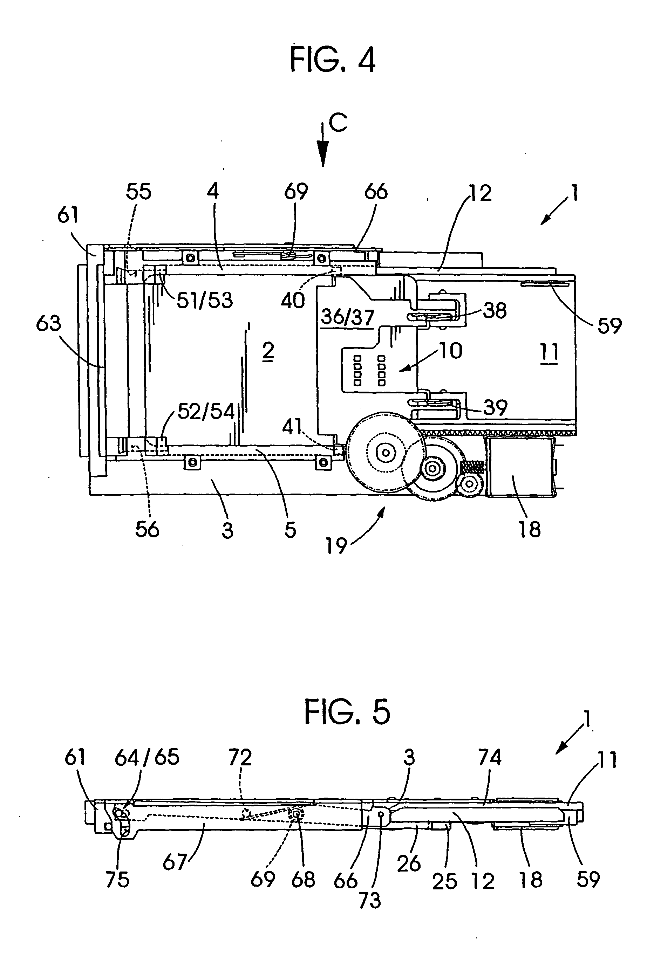

In der in der Figur 1 dargestellten Stellung des Schlittens 11 kann die an dem Frontbalken 61 anliegende und den Orientierungsschlitz 62 abdeckende Klappe 63 gegen die Wirkung der Schenkelfeder 69 beim Einführen einer Chipkarte 2 verschwenkt werden. In der in der Figur 4 dargestellten Stellung des Schlittens 11, bei der sich eine eingeführte Chipkarte 2 in der Lese-/Schreibposition befindet ist die Klappe 63 durch den in die Kulisse 74 eingreifenden Führungsstift 73 arretiert. Beim Einführen einer Chipkarte 2 durch den Orientierungsschlitz 62 kommt die in den Führungsschlitzen 55, 56 geführte Chipkarte 2 in Berührung mit den Anschlagflächen 57, 58. Ein Weiterbewegen der Chipkarte 2, was aufgrund der dem Zahnradpaar 24/ 25 zugeordneten Friktionskuppelung möglich ist, bewirkt ein Abgleiten der Spannelemente 36, 37 von den Rampen 51, 52 und 53, 54 und ein Wirksamwerden der Spannelemente 36, 37 an der Chipkarte 2, d.h. ein Festspannen der Chipkarte 2 auf dem Schlitten 11 sowie nachfolgend ein über die getriebliche Verbindung des Schlittens 11 erfolgender Transport der Chipkarte 2 in die mit der Figur 4 dargestellte Lese-/Schreibposition. Dabei sind die Spannelemente 36, 37 und die durch diese festgehaltene Chipkarte 2 über die Fingerpaare 40, 42 und 41, 43 lose in den Hinterschnitten 13, 44 geführt und durch den Träger 3 abgestützt. An dieser Stelle sei noch darauf hingewiesen, dass die Chipkarten-Aufnahmevorrichtung 1 lediglich mit einem Spannelement ausgerüstet sein kann, wobei das Spannelement mit dem Boden eines in geeigneter Weise ausgebildeten Schlittens zusammenwirkt. Ferner sei noch erwähnt, dass das Getriebe 19 derart ausgebildet werden kann, dass eine Selbsthemmung vermieden wird und somit die Friktionskupplung entfallen kann. Beim Ausgeben der Chipkarte 2, was, ausgelöst durch einen Tastendruck an dem betreffenden Gerät, über den Stellmotor 18 und das Getriebe 19 selbsttätig erfolgt, werden die Spannelemente 36, 37 beim Aufgleiten auf die Rampen 51, 52, 53, 54 "geöffnet" und die Chipkarte 2 wird freigegeben.

## Patentansprüche

1. Chipkarten-Aufnahmevorrichtung mit einem eine Chipkarte halternden Schlitten, welcher zwischen einer Eingabe-/Entnahmeposition und einer Lese-/Schreibposition auf einem Träger verschiebbar gelagert ist, sowie mit Mitteln zum Festspannen und Freigeben einer Chipkarte,
**dadurch gekennzeichnet,**
**dass** auf dem Schlitten (11) zwei Spannelemente (36, 37) derart gefedert gelagert sind, dass sie zangenartig gegeneinander wirken und
**dass** den Spannelementen (36, 37) an dem Träger (3) ausgebildete Führungen (Schienen 4, 5 und Rampen 51, 52, 53, 54) zugeordnet sind derart, dass die Spannelemente (36, 37) in der Eingabe-/Entnahmeposition des Schlittens (11) von der Chipkartenebene abgehoben sind und während des Einführens einer Chipkarte und Verschiebens des Schlittens (11) in die Lese-/Schreibposition jeweils federnd auf den durch Länge und Breite bestimmten Flächen der Chipkarte (2) aufliegen.

2. Chipkarten-Aufnahmevorrichtung nach Anspruch 1,
**dadurch gekennzeichnet,**
**dass** an dem Schlitten (11) eine Verzahnung (17) ausgebildet ist und
**dass** der Schlitten (11) getrieblich mit einem in seiner Drehrichtung umsteuerbaren Stellmotor (18) in Verbindung steht.

3. Chipkarten-Aufnahmevorrichtung nach Anspruch 2,
**dadurch gekennzeichnet,**
**dass** in der getrieblichen Verbindung (19) zwischen dem Stellmotor (18) und dem Schlitten (11) eine Rutschkupplung vorgesehen ist.

4. Chipkarten-Aufnahmevorrichtung nach Anspruch 1,
**dadurch gekennzeichnet,**
**dass** jedes Spannelement (36, 37) an der der Chipkartenebene zugewandten Seite mit Reibbelägen (51, 52, 53, 54) versehen ist.

5. Chipkarten-Aufnahmevorrichtung nach Anspruch 1,
**dadurch gekennzeichnet,**
**dass** den Chipkarten (2) einerseits an dem Träger (3) ausgebildete Führungsschlitze (55, 56) andererseits ein an dem Schlitten (11) ausgebildeter Anschlag (57, 58) zugeordnet sind.

6. Chipkarten-Aufnahmevorrichtung nach Anspruch 1,
**dadurch gekennzeichnet,**
**dass** ein Spannelement (36) mittels einer Freisparung (45) u-förmig ausgebildet ist derart, dass in der Lese-/Schreibposition des Schlittens (11) ein Durchtritt der Lese-/Schreibkontakte zwischen den Schenkeln (33 und 35) des Spannelementes (36) auf die Plattenkontakte (10) einer eingegebenen Chipkarte (2) gewährleistet ist.

7. Chipkarten-Aufnahmevorrichtung nach Anspruch 1,
**dadurch gekennzeichnet,**
**dass** die Spannelemente (36, 37) wenigstens in der Lese-/Schreibposition einer Chipkarte (2) zwischen den Schienen (4, 5) und dem Träger (3) gehaltert sind.

8. Chipkarten-Aufnahmevorrichtung nach Anspruch 1,
**dadurch gekennzeichnet,**
**dass** eine dem Orientierungsschlitz (62) der Chipkarten-Aufnahmevorrichtung (1) zugeordnete Klappe (63) vorgesehen ist derart, dass in der Lese-/Schreibposition des Schlittens (11) der Orientierungsschlitz (62) verriegelt ist, in der Eingabe-/Entnahmeposition des Schlittens (11) die Klappe (63) durch eine von außen zuführbare Chipkarte (2) verschwenkbar ist.

9. Chipkarten-Aufnahmevorrichtung nach Anspruch 8,
**dadurch gekennzeichnet,**
**dass** die Klappe (63) über eine Stift-Schlitz-Verbindung (64, 65) mit einem auf dem Träger (3) gefedert gelagerten Steuerhebel (66) in Wirkverbindung seht und
**dass** der Steuerhebel (66) mittels eines Führungsstiftes (73) in eine in dem Schlitten (11) ausgebildete Kulisse (74) eingreift.

10. Chipkarten-Aufnahmevorrichtung mit einem eine Chipkarte halternden Schlitten, welcher zwischen einer Eingabe-/Entnahmeposition und einer Lese-/Schreibposition auf einem Träger verschiebbar gelagert ist, sowie mit Mitteln zum Festspannen und Freigeben einer Chipkarte,
**dadurch gekennzeichnet,**
**dass** auf dem Schlitten (11) ein Spannelement (36) gefedert gelagert ist,
**dass** das Spannelement (36) auf einer eingegebenen Chipkarte (2) federnd aufliegt und
**dass** dem Spannelement (36) an dem Träger (3) ausgebildete Rampen (51, 52) zugeordnet sind derart, dass das Spannelement (36) in der Eingabe-/Entnahmeposition des Schlittens (11) von der Chipkartenebene abgehoben ist.

## Claims

1. Chip-card-receiving device comprising a carriage for holding a chip card, which carriage is mounted displaceably between an insertion/removal position and a reading/writing position on a carrier, and also comprising means for fixing and releasing a chip card, **characterized in that** two clamping elements (36, 37) are spring-mounted on the carriage (11) in such a way that they act against each other in the manner of tongs and **in that** the clamping elements (36, 37) are assigned guides (rails 4, 5 and ramps 51, 52, 53, 54) formed on the carrier (3) in such a way that the clamping elements (36, 37) are lifted from the plane of the chip card in the insertion/removal position of the carriage (11) and rest resiliently on the areas of the chip card (2) determined by length and width during the insertion of a chip card and displacement of the carriage (11) into the reading/writing position.

2. Chip-card-receiving device according to Claim 1, **characterized in that** a serration (17) is formed on the carriage (11) and **in that** the carriage (11) is in connection by a gear mechanism with a servo motor (18) which can be reversed in its direction of rotation.

3. Chip-card-receiving device according to Claim 2, **characterized in that** a slip clutch is provided in the connection (19) by a gear mechanism between the servo motor (18) and the carriage (11).

4. Chip-card-receiving device according to Claim 1, **characterized in that** each clamping element (36, 37) is provided on the side facing the chip card plane with friction coatings (51, 52, 53, 54).

5. Chip-card-receiving device according to Claim 1, **characterized in that** the chip cards (2) are assigned on the one hand guiding slots (55, 56) formed on the carrier (3), on the other hand a stop (57, 58) formed on the carriage (11).

6. Chip-card-receiving device according to Claim 1, **characterized in that** a clamping element (36) is formed by means of a clearance (45) in a u-shaped form in such a way that, in the reading/writing position of the carriage (11), it is ensured that the reading/writing contacts can pass through between the legs (33 and 35) of the clamping element (36) to the plate contacts (10) of an inserted chip card (2).

7. Chip-card-receiving device according to Claim 1, **characterized in that**, at least in the reading/writing position of a chip card (2), the clamping elements (36, 37) are held between the rails (4 5) and the carrier (3).

8. Chip-card-receiving device according to Claim 1, **characterized in that** a flap (63) assigned to the orientation slot (62) of the chip-card-receiving device (1) is provided in such a way that, in the reading/writing position of the carriage (11), the orientation slot (62) is locked, in the insertion/removal position of the carriage (11), the flap (63) can be pivoted by a chip card (2) that can be fed in from the outside.

9. Chip-card-receiving device according to Claim 8, **characterized in that** the flap (63) is in operative connection by means of a pin-slot connection (64, 65) with a control lever (66) spring-mounted on the carrier (3), and **in that** the control lever (66) engages by means of a guiding pin (73) in a slotted link (74) formed in the carriage (11).

10. Chip-card-receiving device comprising a carriage for holding a chip card, which carriage is mounted displaceably between an insertion/removal position and a reading/writing position on a carrier, and also comprising means for fixing and releasing a chip card, **characterized in that** a clamping element (36) is spring-mounted on the carriage (11), **in that** the clamping element (36) rests resiliently on an inserted chip card (2) and **in that** the clamping element (36) is assigned ramps (51, 52), formed on the carrier (3), in such a way that the clamping element (36) is lifted from the plane of the chip card in the insertion/removal position of the carriage (11).

## Revendications

1. Dispositif de réception de cartes à puce comportant un chariot retenant une carte à puce, lequel est monté coulissant sur un support entre une position d'introduction et restitution et une position de lecture et écriture, ainsi que des moyens permettant de bloquer et de libérer une carte à puce,
**caractérisé par le fait**
**que** deux organes de serrage (36, 37) sont montés sur ressorts sur le chariot (11) de telle façon qu'ils agissent l'un contre l'autre à la manière d'une pince et que des systèmes de guidage (rails 4, 5 et rampes 51, 52, 53, 54) ménagés sur le support (3) sont affectés aux organes de serrage (36, 37) de telle manière que les organes de serrage (36, 37) sont, dans la position d'introduction et restitution du chariot (11), soulevés au-dessus du plan de la carte à puce et, pendant l'introduction d'une carte à puce et pendant le déplacement du chariot (11) dans la position de lecture et écriture, appliqués chacun d'une façon élastique sur les surfaces de la carte à puce (2) définies par la longueur et la largeur.

2. Dispositif de réception de cartes à puce selon la revendication 1,
**caractérisé par le fait**
**qu'**une denture (17) est formée sur le chariot (11) et que le chariot (11) est commandé par un mécanisme d'entraînement comportant un servomoteur (18) dont le sens de rotation est inversible.

3. Dispositif de réception de cartes à puce selon la revendication 2,
**caractérisé par le fait**
**qu'**il est prévu, dans le mécanisme d'entraînement (19), un embrayage à friction entre le servomoteur (18) et le chariot (11).

4. Dispositif de réception de cartes à puce selon la revendication 1,
**caractérisé par le fait**
**que** chaque organe de serrage (36, 37) est doté de garnitures de friction (51, 52, 53, 54) sur le côté tourné vers le plan de la carte à puce.

5. Dispositif de réception de cartes à puce selon la revendication 1,
**caractérisé par le fait**
**que**, d'une part, des fentes de guidage (55, 56) ménagées sur le support (3), d'autre part, une butée (57, 58) ménagée sur le chariot (11) correspondent aux cartes à puce (2).

6. Dispositif de réception de cartes à puce selon la revendication 1,
**caractérisé par le fait**
**qu'**un organe de serrage (36) est conçu en forme de U au moyen d'un évidement (45) de manière telle que, dans la position de lecture et écriture du chariot (11), une traversée des contacts de lecture et écriture entre les branches (33 et 35) de l'organe de serrage (36) pour atteindre les contacts d'une carte à puce (2) qui a été introduite est assurée.

7. Dispositif de réception de cartes à puce selon la revendication 1,
**caractérisé par le fait**
**que** les organes de serrage (36, 37) sont maintenus, au moins dans la position de lecture et écriture d'une carte à puce (2), entre les rails (4, 5) et le support (3).

8. Dispositif de réception de cartes à puce selon la revendication 1,
**caractérisé par le fait**
**qu'**il est prévu un clapet (63) correspondant à la fente d'orientation (62) du dispositif de réception de cartes à puce (1) de manière telle que, dans la position de lecture et écriture du chariot (11), la fente d'orientation (62) est verrouillée et, dans la position d'introduction et de restitution du chariot (11), le clapet (63) peut basculer sous l'effet d'une carte à puce (2) introduite de l'extérieur.

9. Dispositif de réception de cartes à puce selon la revendication 8,
**caractérisé par le fait**
**que** le clapet (63) est couplé, par l'intermédiaire d'un assemblage à broche et fente (64, 65), à un levier de commande (66) monté sur ressorts sur le support (3) et
**que** le levier de commande (66) s'engage, au moyen d'une broche de guidage (73), dans une coulisse (74) ménagée dans le chariot (11).

10. Dispositif de réception de cartes à puce comportant un chariot retenant une carte à puce, lequel est monté coulissant sur un support entre une position d'introduction et restitution et une position de lecture et écriture, ainsi que des moyens permettant de bloquer et de libérer une carte à puce,
**caractérisé par le fait**
**qu'**un organe de serrage (36) est monté sur ressorts sur le chariot (11),
**que** l'organe de serrage (36) s'applique en faisant ressort sur une carte à puce (2) qui a été introduite et
**que** des rampes (51, 52) ménagées sur le support (3) correspondent à l'organe de serrage (36) de manière telle que l'organe de serrage (36) est, dans la position d'introduction et restitution du chariot (11), soulevé au-dessus du plan de la carte à puce.
